# EUROPEAN PATENT SPECIFICATION

(11) **EP 1 467 905 B1**
(45) Date of publication and mention of the grant of the patent: **25.10.2006**
(21) Application number: 02793640.0
(22) Date of filing: 13.12.2002
(51) Int. Cl.: B62D 33/067, B62D 33/10

(54) **BUSHING ARRANGEMENT FOR A STABILISER**
BUCHSENANORDNUNG FÜR STABILISATOR
COUSSINET POUR BARRE STABILISATRICE

(30) Priority: 27.12.2001 SE 0104391
(43) Date of publication of application: 20.10.2004
(73) Proprietor: Scania CV AB (publ), 151 87 Södertälje (SE)
(72) Inventor: OLSSON, Ulf, S-155 34 Nykvarn (SE); BRUCE, Niklas, S-151 68 Södertälje (SE); CATOVIC, Rade, S-112 66 Stockholm (SE)
(74) Representative: Sjögren Paulsson, Stina
(86) International application number: PCT/SE2002/002316
(87) International publication number: WO 2003/062034

(56) References cited:
- EP-A1- 0 047 628
- EP-A1- 0 525 435
- EP-A2- 0 122 513
- DE-A- 2 229 436
- DATABASE WPI Week 198201, Derwent Publications Ltd., London, GB; Class Q22, AN 1982-A1744E, XP002978848 & SU 816 847 A (MINSK CAR WKS) 30 March 1981
- DATABASE WPI Week 198005, Derwent Publications Ltd., London, GB; Class Q22, AN 1980-B1212C, XP002978849 & SU 662 408 A (OBOROTOV A N) 18 May 1979

## Description

### Technical field

The present invention relates to a bushing arrangement for an anti-roll bar.

### Background

Heavy vehicles, e.g. trucks, often have a cab which is springingly suspended with respect to the vehicle's frame at three or four different points.

Heavy vehicles of the abovementioned kind often have a driver's cab which is suspended on the vehicle's frame and tiltable relative to the vehicle's frame. The cab is tiltable to provide access to the engine for servicing and repairs as necessary. The rear edge of the cab is suspended, for example, by means of a conventional air spring arrangement.

Such vehicles are often provided with an anti-roll bar whose purpose is to damp out the various kinds of springing movements which may occur at the various suspension points. In such cases, a forward anti-roll bar incorporates a transverse torsion bar which has at each of the axial ends a link arm which is directed in the longitudinal direction of the vehicle. Each link arm is directly or indirectly supported via bearings with respect to the cab at one end and to the frame at the other end.

The types of bearings used for the purpose are plain, ball and roller bearings. These bearings afford advantages in that they do not absorb springing energy which it is desired be transferred via the anti-roll bar to the suspension of the other side of the vehicle. This is because not only do they not damp out any springing movements but they are also almost free from losses during the torsional rotation which occurs at the link arm fastening. However, their rigid structure does entail disadvantages such as their readily propagating vibrations from the frame to the cab which adversely affect the driver.

A usual alternative solution is to use rubber bushings. Bushings are used in anti-roll bars to prevent propagation of vibrations from the frame to the cab. Such a bushing results in little damping of springing movements and therefore cannot provide sufficient springing comfort. A softer bushing provides good damping, which is advantageous from the vibration and comfort points of view, but has inferior strength characteristics and also absorbs spring energy, with consequent risk of impairment of anti-roll bar function. A bushing with rigidity intermediate between the two kinds just mentioned may risk causing natural oscillations excited by front axle springing, frame oscillations or the like.

An example of a bushing for an anti-roll bar is referred to in SE 502 395 C2, (WO 95/23725) according to which the preamble of claim 1 is established which refers to a device for suspending a sprung driver's cab with respect to a vehicle frame, incorporating an anti-roll bar which comprises two link arms oriented substantially in the longitudinal direction of the vehicle. The link arms are supported with respect to the cab or the frame by means of a bushing with different rigidities in mutually perpendicular radial directions. The bushing incorporates an elastic means with two vertically diametrically opposite elastic units between casings arranged on the link arms and the cab/frame respectively so as to create a respective hollow space in the longitudinal direction of the vehicle. The design of the elastic means is such that its spring constant in the vertical direction of the vehicle is at least eight times greater than the spring constant in the longitudinal direction of the vehicle.

A problem with bushings of that kind is that the spring constant of the bushings in the vehicle's transverse direction is determined by the elastic means which also determines the spring constant in the vehicle's vertical and longitudinal directions respectively. Another problem with bushings of that kind is that the elastic means is fixed at its ends situated in the vehicle's transverse direction, which means that the elastic means is subject to shearing forces when the cab is tilted for access to the engine.

### Brief description of the invention

The problem that the spring constant of the bushings in the vehicle's transverse direction is determined by the elastic means which also determines the spring constant in the vehicle's vertical and longitudinal directions respectively is solved according to the invention by providing a bushing arrangement incorporating not only a separate bushing unit which absorbs the vertical and longitudinal movements relative to the vehicle, but also at least one further bushing unit, preferably two other separate bushing units, to absorb the lateral movements relative to the vehicle, whereby the design of at least one of the forward suspensions of the cab is according to the invention. The bushing unit which absorbs the vertical and longitudinal movements relative to the vehicle is arranged to slide on a spindle in the transverse direction of the vehicle, so that the at least one further bushing unit, preferably the two other separate bushing units, absorbs/absorb all the lateral movements relative to the vehicle.

The bushing and hence the resulting springing are soft in the vehicle's longitudinal and transverse directions but rigid in the vehicle's vertical direction, so the soft portion provides damping of longitudinal and transverse vibrations, while the rigid portion enables rolling movements of the cab to be damped by the anti-roll bar.

The features of the bushing which are stated in claim 1 result in the advantage of changing the characteristics of the bushing arrangement in the vehicle's lateral direction without affecting the characteristics in the vehicle's longitudinal and vertical directions, which means that the bushing can be set for different lateral rigidity independently of the vertical and longitudinal rigidity.

The problem of the elastic means being fixed at its ends situated in the vehicle's transverse direction and being thereby subject to shearing forces when the cab is tilted for access to the engine is solved by the features in the dependent claims whereby the bushing is supported, resulting in the advantages that the cab can be tilted without causing considerable wear of the bushings (which means that the service life of the bushings may be lengthened) and that the design of the bushing means that more rubber can be incorporated in the bushing, thereby also lengthening its service life.

### Brief description of the drawings

The invention will now be explained in more detail below with reference to the attached drawings in which:
Figure 1 depicts schematically a view of a forward suspension and springing arrangement for a cab for a heavy vehicle,
Figure 2 depicts schematically a perspective view of a bushing arrangement with three bushing units according to a first embodiment of the invention,
Figure 3 depicts schematically a cross-section of a bushing arrangement of the first embodiment of the invention depicted in Figure 1,
Figure 4 depicts schematically a cross-section of a bushing arrangement according to a second embodiment of the invention, and
Figure 5 depicts schematically a cross-section of a bushing arrangement according to a third embodiment of the invention.

### Description of preferred embodiments

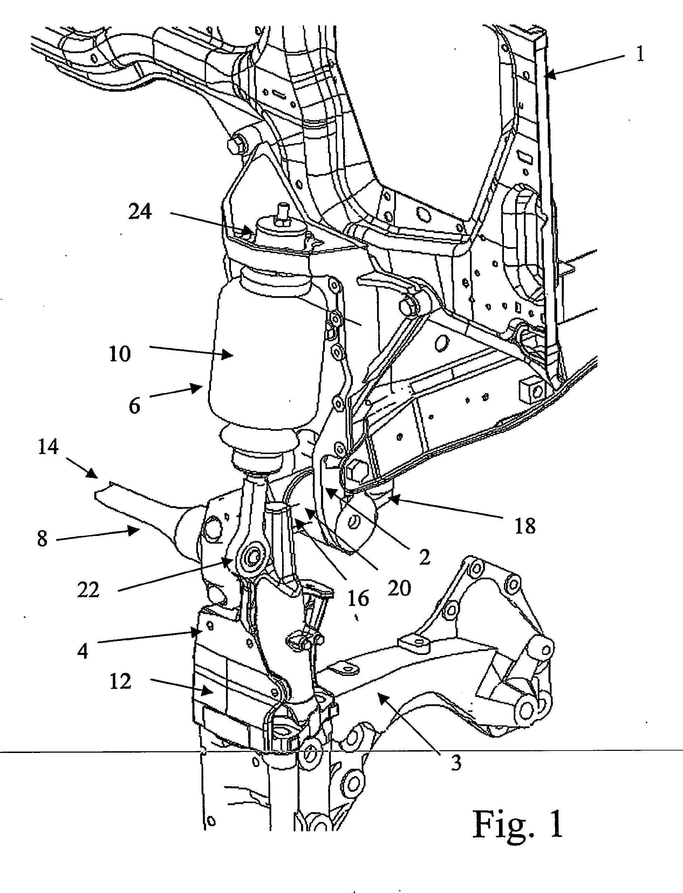

Figure 1 depicts schematically a view of a forward suspension and springing arrangement for a cab 1 for a heavy vehicle. The cab 1 of a heavy vehicle, e.g. a truck, is usually suspended on a vehicle frame 3 which mainly comprises two longitudinal parallel side-members. The latter are tied together by a number of transverse members, and an engine is fastened to the frame 3 in a conventional manner. To render the engine readily accessible for inspection and repairs as necessary, the cab 1 according to the invention is tiltable forwards relative to the frame 3. The front edge of the cab 1 is springingly suspended relative to the frame 3 in the manner according to the invention. The rear edge of the cab 1 is suspended in a conventional manner, e.g. by means of an air spring arrangement. The forward suspension arrangement comprises a bracket 2 secured to the cab 1, a fastening portion 4 fastened to the frame, a spring element 6 and an anti-roll bar 8.

The arrangement is symmetrical about a vertical plane through the middle of the vehicle in its longitudinal direction, so only one (the left) portion is depicted.

The spring element 6, which comprises an undepicted central shock-absorber and an air spring 10, connects the bracket 2 secured to the cab 1 to the fastening portion 4 which is fastened to the frame and which forms part of the vertical turret 12 at the front edge of the frame 3.

The purpose of the anti-roll bar 8 is to damp in a conventional manner various kinds of springing movements of the spring element 6, and said anti-roll bar incorporates a torsion rod 14 which is arranged in the vehicle's transverse direction between the two upper ends of the turret 12 and which has at each of its own ends a link arm 16 which is oriented in the vehicle's longitudinal direction and, in this case, directed rearwards, and is arranged for rotation jointly with the torsion rod 14. The rear portion 18 of the link arm is supported for rotation with respect to the lower portion of the bracket by means of a bushing arrangement 20 which allows relative rotation between the link arm 16 and the bracket 2 about a horizontal spindle which extends substantially transversely relative to the vehicle.

A pivot pin 22 is supported for rotation with respect to the end portion of the torsion rod 14 but is secured against axial movement relative to the anti-roll bar 8, preferably by means of a conventional ball bearing. The pivot pin 22 is secured to the turret 12 which is fastened to the frame. The spring element 6 is secured at its upper end to the bracket 2 by means of a rubber bushing 24 and at its lower end to the pivot pin 22 by means of a ball bearing.

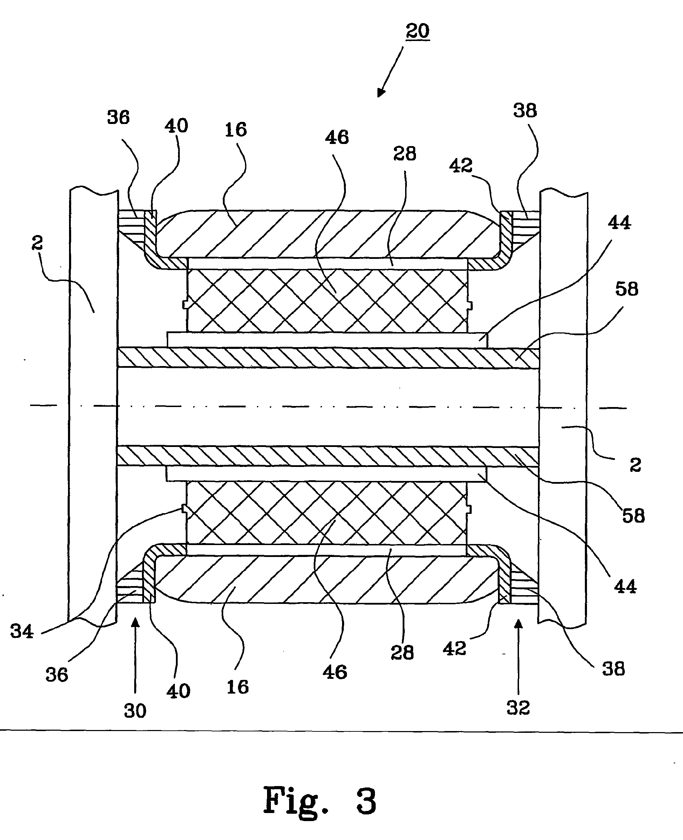

The bushing arrangement 20 for the anti-roll bar 8 takes with advantage the form of a prefabricated unit which is best illustrated in Figures 3, 4 and 5 and is described in detail below. The bushing arrangement 20 comprises inter alia an outer casing 28 with a cylindrical shell surface facing outwards which is intended to be pressed into a hole in the link arm 16. A suitable manufacturing method may be to cast or forge the link arm 16 integrally and thereafter to drill through its rear portion 18 a hole appropriate to accommodating the bushing arrangement 20.

The invention thus relates to a bushing arrangement for an anti-roll bar 8 in the suspension of a sprung driver's cab 1 with respect to a vehicle frame 3, with the anti-roll bar 8 being supported for rotation with respect to both the cab 1 and the frame 3, which anti-roll bar 8 comprises two link arms 16 oriented substantially in the vehicle's longitudinal direction and each situated on their respective sides of a longitudinal vertical plane through the middle of the vehicle, which link arms 16 are firmly connected together by means of a transverse torsion rod 14, with each of the link arms 16 being supported by at least one vehicle portion in the form of either the driver's cab 1 or the vehicle frame 3 to allow relative rotation between the link arm 16 and the vehicle portion about a spindle 58 oriented substantially in the vehicle's transverse direction, with the link arm 16 being supported on the vehicle portion by means of a first bushing unit 34 with different rigidities in mutually perpendicular radial directions relative to said spindle 58, with the bushing arrangement further comprising at least one bushing unit 30,32 arranged to damp movements in the longitudinal direction of said spindle 58 oriented substantially in the vehicle's transverse direction. The bushing unit 34 which absorbs the vertical and longitudinal movements relative to the vehicle is arranged to slide on said spindle 58 in the vehicle's transverse direction, so that the at least one further bushing unit 30,32, preferably the two other separate bushing units 30,32, absorbs/absorb all the lateral movements relative to the vehicle.

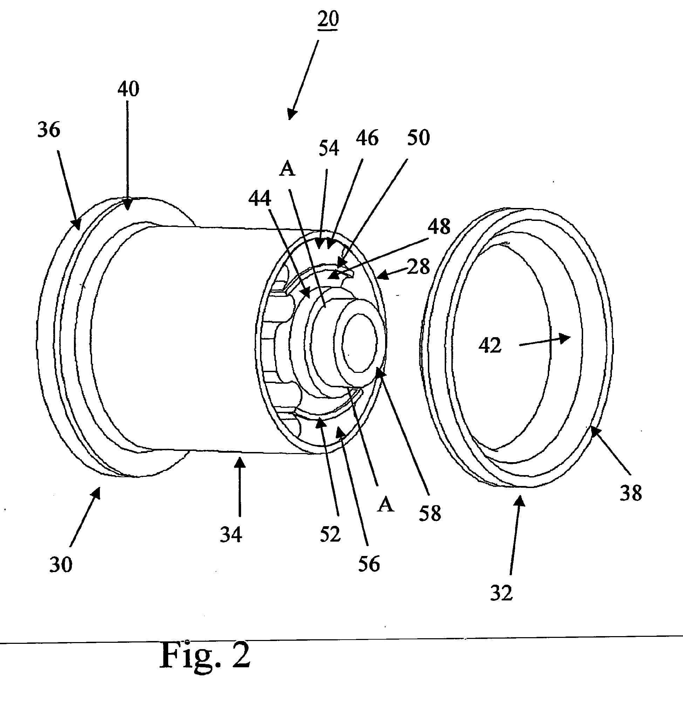

Figure 2 depicts schematically a perspective view of a bushing arrangement 20 with three bushing units according to a first embodiment of the invention. The bushing arrangement 20 comprises two lateral bushing units 30,32, at least one of which may be replaceable, and, arranged between them, an intermediate bushing unit 34. Each of the lateral bushing units 30 and 32 respectively incorporates a lateral bushing 36 and 38 respectively and an intermediate disc 40 and 42 respectively, preferably made of steel, connected to the lateral bushings 36 and 38 respectively. The intermediate bushing unit 34 comprises an outer casing 28, preferably made of steel, an inner casing 44 arranged within and substantially concentric to the outer casing 28 and preferably made of steel, and an intermediate bushing 46 which is arranged between the outer casing 28 and the inner casing 44 and which connects the outer casing 28 to the inner casing 44. Said intermediate bushing 46 may be made integrally, preferably of rubber. Alternatively, said intermediate bushing 46 may comprise two or more parts. For example, the intermediate bushing 46, as viewed along an axis A-A running transverse to the outer casing 28 and passing through the cross-sectional centre of the inner casing 44, may comprise an inner intermediate bushing portion 48 arranged outside and connected to the inner casing 44, first and second stiffening portions 50 and 52 respectively each arranged outside and connected to the inner intermediate bushing portion 48 on their respective sides of the inner casing 44, first and second outer intermediate bushing portions 54 and 56 respectively which are not only arranged outside and connected to the first and second stiffening portions 50 and 52 respectively but are also arranged inside and connected to the outer casing 28. The stiffening portions 50,52 are preferably made of plastic or metal, e.g. steel, whereas the elastic bushing portions 36,38,46,54,56 are preferably made of rubber. The fastening between the various portions is preferably effected by solid vulcanisation. The drawing also shows a spindle 58 in tubular form, preferably made of steel, which is situated inside the inner casing 44 so that the inner casing 44 and hence the whole intermediate bushing unit 34 can rotate about this spindle 58. The spindle 58 is firmly attached to the bracket 2 which is fastened to the cab. The intermediate bushing unit 34 which absorbs the vertical and longitudinal movements relative to the vehicle is arranged to slide on said spindle 58 in the vehicle's longitudinal direction so that the at least one further bushing unit 30,32, preferably the two other separate bushing units 30,32, absorbs/absorb all the lateral movements relative to the vehicle.

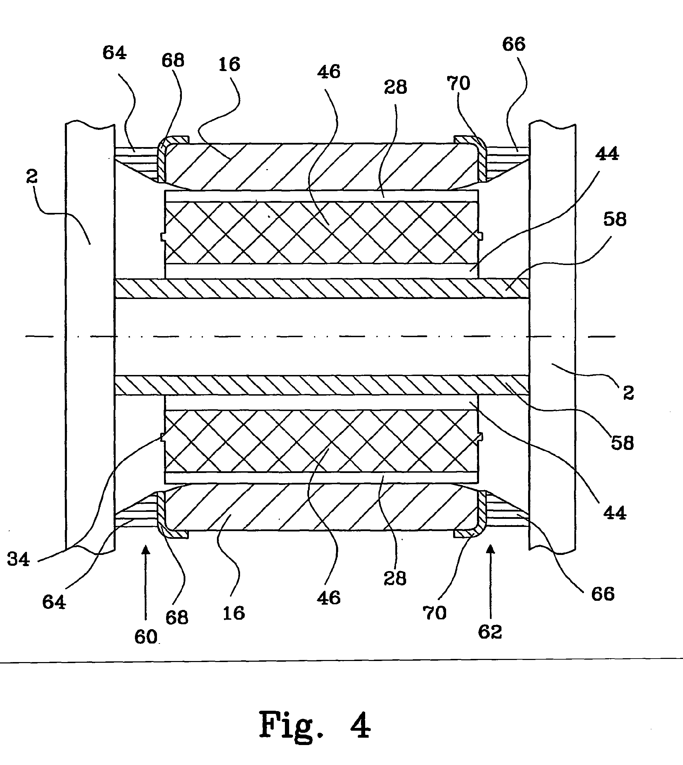

Figure 3 depicts schematically a cross-section of a bushing arrangement of the first embodiment of the invention depicted in Figure 2. The bushing arrangement 20 comprises two lateral bushing units 30,32 and, arranged between them, an intermediate bushing unit 34. Each of the lateral bushing units 30,32 respectively incorporates a lateral bushing 36 and 38 respectively and an intermediate disc 40 and 42 respectively, preferably made of steel, connected to the lateral bushings 36 and 38 respectively. The intermediate bushing unit 34 comprises an outer casing 28, preferably made of steel, an inner casing 44 arranged inside and substantially concentric to the outer casing 28 and preferably made of low-friction material, and an intermediate bushing 46 which is arranged between the outer casing 28 and the inner casing 44 and which connects the outer casing 28 to the inner casing 44. Said intermediate bushing 46 may be made integrally, preferably made of rubber. Alternatively, said intermediate bushing 46 may comprise two or more parts. The intermediate discs 40,42 of the lateral bushing units abut against both the link arm 16 and the outer casing 28 of the intermediate bushing unit. The drawing also shows a spindle 58 in tubular form, preferably made of steel, which is situated inside the inner casing 44, whereby the inner casing 44 and hence the whole intermediate bushing unit 34 can rotate about this spindle 58. The spindle 58 is firmly attached to the bracket 2 which is fastened to the cab. The intermediate bushing unit 34 which absorbs the vertical and longitudinal movements relative to the vehicle is arranged to slide on said spindle 58 in the vehicle's longitudinal direction so that the at least one further lateral bushing unit 30,32, preferably the two other separate lateral bushing units 30,32, absorbs/absorb all the lateral movements relative to the vehicle. Figure 4 depicts schematically a cross-section of a bushing arrangement according to a second embodiment of the invention. The bushing arrangement 20 comprises two lateral bushing units 60,62 and, arranged between them, an intermediate bushing unit 34. Each of the lateral bushing units 60 and 62 incorporates a lateral bushing 64 and 66 respectively and an intermediate disc 68 and 70 respectively, preferably made of steel, connected to the lateral bushings 64 and 66 respectively. The intermediate bushing 34 comprises an outer casing 28, preferably made of steel, an inner casing 44 arranged inside and substantially concentric to the outer casing 28 and preferably made of low-friction material, and an intermediate bushing 46 which is arranged between the outer casing 28 and the inner casing 44 and which connects the outer casing 28 to the inner casing 44. Said intermediate bushing 46 may be made integrally, preferably of rubber. Alternatively, said intermediate bushing 46 may comprise two or more parts. The difference as compared with the embodiment according to Figure 3 is that the intermediate discs 68,70 of the lateral bushing units abut against the link arm 16 on the latter's outside as viewed in the radial direction of the intermediate discs 68,70. The advantage is of having space for more intermediate bushing material as compared with the situation according to the first embodiment of the invention. The disadvantage is that the link arm 16 has to be machined. The drawing also shows a spindle 58 in tubular form, preferably made of steel, which is situated inside the inner casing 44 so that the inner casing 44 and hence the whole intermediate bushing unit 34 can rotate about this spindle 58. The spindle 58 is firmly attached to the bracket 2 which is fastened to the cab. The intermediate bushing unit 34 which absorbs the vertical and longitudinal movements relative to the vehicle is arranged to slide on said spindle 58 in the vehicle's transverse direction so that the at least one further lateral bushing unit 60,62, preferably the two other separate lateral bushing units 60,62, absorbs/absorb all the lateral movements relative to the vehicle.

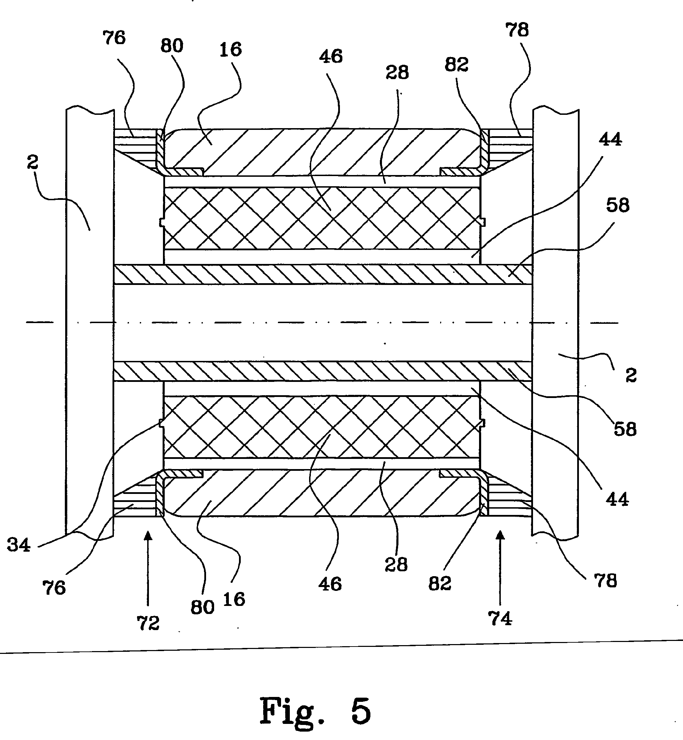

Figure 5 depicts schematically a cross-section of a bushing arrangement according to a third embodiment of the invention. The bushing arrangement 20 comprises two lateral bushing units 72,74 and, arranged between them, an intermediate bushing unit 34. Each of the lateral bushing units 72 and 74 incorporates a lateral bushing 76 and 78 respectively and an intermediate disc 80 and 82 respectively, preferably made of steel, connected to the lateral bushings 76 and 78 respectively. The intermediate bushing 34 comprises an outer casing 28, preferably made of steel, an inner casing 44 arranged inside and substantially concentric to the outer casing 28 and preferably made of low-friction material, and an intermediate bushing 46 which is arranged between the outer casing 28 and the inner casing 44 and which connects the outer casing 28 to the inner casing 44. Said intermediate bushing 46 may be made integrally, preferably of rubber. Alternatively, said intermediate bushing 46 may comprise two or more parts. The difference as compared with the embodiment according to Figure 4 is that the intermediate discs 80,82 of the lateral bushing units abut against the link arm 16 on the latter's inside as viewed in the radial direction of the intermediate discs 80,82. The advantage is of having space for more intermediate bushing material as compared with the situation according to the first embodiment of the invention. The disadvantage is that the link arm 16 has possibly to be machined. The drawing also shows a spindle 58 in tubular form, preferably made of steel, which is situated inside the inner casing 44 so that the inner casing 44 and hence the whole intermediate bushing unit 34 can rotate about this spindle 58. The spindle 58 is firmly attached to the bracket 2 which is fastened to the cab. The intermediate bushing unit 34 which absorbs the vertical and longitudinal movements relative to the vehicle is arranged to slide on said spindle 58 in the vehicle's transverse direction so that the at least one further lateral bushing unit 72,74, preferably the two other separate lateral bushing units 72,74, absorbs/absorb all the lateral movements relative to the vehicle.

According to the embodiment described above, the dead weight of the cab is borne by the spring element so that the bushing arrangement is only stressed by the dynamic forces which occur during rolling of the vehicle and by the road-induced vibrations which the bushing arrangement is intended to filter out and which are thus to be prevented from reaching the cab. According to the embodiments, the fastening of the anti-roll bar's link arm to the torsion bar is secured against relative movement with respect to the frame, while the other end is supported with respect to the cab. The opposite relationship is also possible. Also according to the embodiments, the link arm is directed rearwards, but it may also be turned so as to be directed forwards instead.

The lateral bushing units and the intermediate bushing unit which form part of the bushing arrangement may be connected together movably or immovably.

## Claims

1. A bushing arrangement for an anti-roll bar (8) in the suspension of a sprung driver's cab (1) with respect to a vehicle frame (3), whereby the anti-roll bar (8) is supported for rotation with respect both to the cab (1) and to the frame (3), which anti-roll bar (8) incorporates two link arms (16) oriented substantially in the vehicle's longitudinal direction and each situated on their respective sides of a longitudinal vertical plane through the middle of the vehicle, which link arms (16) are firmly connected together by means of a transverse torsion bar (14), and whereby each of the link arms (16) is supported with respect to at least one vehicle portion in the form either of the driver's cab (1) or of the vehicle's frame (3) to allow relative rotation between the link arm (16) and the vehicle portion about a spindle (58) which is oriented substantially in the vehicle's transverse direction, with the link arm (16) being supported on the vehicle portion via a first bushing unit (34) with different rigidities in mutually perpendicular radial directions relative to said spindle (58), **characterised in that** the bushing arrangement also incorporates at least one further lateral bushing unit (30,32;60,62;72,74) arranged to damp movements in the longitudinal direction of said spindle (58), wherein the lateral bushing unit (30,32;60,62;72,74)) comprises a lateral bushing (36, 38;64, 66;76, 78) and an intermediate disc (40, 42;68 ,70;80, 82) which is connected to the lateral bushing (36, 38;64, 66;76, 78), and wherein the intermediate disc (40, 42;68 ,70;80, 82) of the lateral bushing unit abut against the link arm (16).

2. A bushing arrangement according to claim 1, **characterised in that** said at least one further separate bushing unit (30,32;60,62;72,74) is replaceable.

3. A bushing arrangement according to either of claims 1 or 2, **characterised in that** the bushing arrangement comprises two lateral bushing units (30,32;60,62;72,74) and, arranged between them, an intermediate bushing unit (34).

4. A bushing arrangement according to claim 3, **characterised in that** each of the lateral bushing units (30;60;72 and 32;62;74 respectively) comprises a lateral bushing (36;64;76 and 38;66;78 respectively) and an intermediate disc (40;68;80 and 42;70;82 respectively) which is connected to the lateral bushing (36;64;76 and 38;66;78 respectively).

5. A bushing arrangement according to either of claims 3 and 4, **characterised in that** the intermediate bushing unit (34) comprises an outer casing (28), an inner casing (44) arranged inside and substantially concentric to the outer casing (28), and an intermediate bushing (46) which is arranged between the outer casing (28) and the inner casing (44) and which connects the outer casing (28) to the inner casing (44).

6. A bushing arrangement according to claim 4, **characterised in that** the intermediate disc (40;68;80 and 42;70;82 respectively) of the lateral bushing units abut against both the link arm (16) and the outer casing (28) of the intermediate bushing unit.

7. A bushing arrangement according to any one of claims 1 to 6, **characterised in that** said spindle (58) is fixed to a bracket (2) which is fixed to the cab (1) or the frame (3).

8. A bushing arrangement according to either claims 1 and 6, **characterised in that** a lateral bushing (36;64;76 and 38;66;78 respectively) of the lateral bushing unit abuts against a bracket (2) which is fixed to the cab (1) or the frame (3).

9. A bushing arrangement according to any one of claims 1 to 8, **characterised in that** the cab (1) is tiltable about said spindle (58).

10. A forward suspension and springing arrangement for a cab for a heavy vehicle, **characterised in that** it incorporates a bushing arrangement according to any one of claims 1 to 9.

## Patentansprüche

1. Buchsenanordnung für eine Anti-Kippstange (8) in der Aufhängung einer bezüglich eines Fahrzeugrahmens (3) federnd gelagerten Fahrerkabine (1), wobei die Anti-Kippstange (8) zur Drehung sowohl bezüglich der Kabine (1) als auch des Rahmens (3) gelagert ist, wobei die Anti-Kippstange (8) zwei Verbindungsarme (16) umfasst, die im Wesentlichen in der Fahrzeuglängsrichtung orientiert sind und jeweils auf einer Seite einer in Längsrichtung verlaufenden Vertikalebene durch die Mitte des Fahrzeugs angeordnet sind, wobei die Verbindungsarme (16) fest mittels einer in Querrichtung verlaufenden Torsionsstange (14) miteinander verbunden sind und wobei jeder der Verbindungsarme (16) bezüglich wenigstens eines Fahrzeugteils in Form entweder der Fahrerkabine (1) oder des Fahrzeugrahmens (3) gelagert ist, um eine Relativdrehung zwischen dem Verbindungsarm (16) und dem Fahrzeugteil um eine Spindel (58) zu ermöglichen, die im Wesentlichen in der Fahrzeugquerrichtung orientiert ist, wobei der Verbindungsarm (16) an dem Fahrzeugteil über eine erste Buchseneinheit (34) mit verschiedenen Steifigkeiten jeweils in senkrechten Radialrichtungen relativ zu der Spindel (58) gelagert ist,
**dadurch gekennzeichnet, dass** die Buchsenanordnung auch wenigstens eine weitere seitliche Buchsenanordnung (30, 32; 60, 62; 72, 74) aufweist, die dazu angeordnet ist, Bewegungen in der Längsrichtung der Spindel (58) zu dämpfen, wobei die seitliche Buchseneinheit (30, 32; 60, 62; 72, 74) eine seitliche Buchse (36, 38; 64, 66; 76, 78) und eine Zwischenscheibe (40, 42; 68, 70; 80, 82) aufweist, die mit der seitlichen Buchse (36, 38; 64, 66; 76, 78) verbunden ist, und wobei die Zwischenscheibe (40, 42; 68, 70; 80, 82) der seitlichen Buchseneinheit an dem Verbindungsarm (60) anliegt.

2. Buchsenanordnung nach Anspruch 1,
**dadurch gekennzeichnet, dass** wenigstens eine weitere separate Buchsenanordnung (30, 32; 60, 62;72, 74) ersetzbar ist.

3. Buchsenanordnung nach einem der Ansprüche 1 oder 2,
**dadurch gekennzeichnet, dass** die Buchsenanordnung zwei seitliche Buchseneinheiten (30, 32; 60, 62; 72, 74) und zwischen diesen angeordnet eine Zwischenbuchseneinheit (34) umfasst.

4. Buchsenanordnung nach Anspruch 3,
**dadurch gekennzeichnet, dass** jede der seitlichen Buchseneinheiten (30; 60; 72 und 32; 62; 74) eine seitliche Buchse (36; 64; 76 und 38; 66; 78) und eine Zwischenscheibe (40; 68; 80 und 42; 70; 82) aufweist, die mit der seitlichen Buchse (36; 64; 76 und 38; 66; 78) verbunden ist.

5. Buchsenanordnung nach einem der Ansprüche 3 und 4,
**dadurch gekennzeichnet, dass** die Zwischenbuchseneinheit (34) ein äußeres Gehäuse (28), ein inneres Gehäuse (44), das innerhalb und im Wesentlichen konzentrisch zu dem äußeren Gehäuse (28) angeordnet ist, und eine Zwischenbuchse (46) aufweist, die zwischen dem äußeren Gehäuse (28) und dem inneren Gehäuse (44) angeordnet ist, und die das äußere (28) mit dem inneren Gehäuse (44) verbindet.

6. Buchsenanordnung nach Anspruch 4,
**dadurch gekennzeichnet, dass** die Zwischenscheibe (40; 68; 80 und 42; 70; 82) der seitlichen Buchseneinheiten sowohl am Verbindungsarm (16) als auch am äußeren Gehäuse (28) der Zwischenbuchseneinheit anliegt.

7. Buchsenanordnung nach einem der Ansprüche 1 bis 6,
**dadurch gekennzeichnet, dass** die Spindel (28) an einer Halterung (2) befestigt ist, die an der Kabine (1) oder an dem Rahmen (3) befestigt ist.

8. Buchsenanordnung nach einem der Ansprüche 1 und 6,
**dadurch gekennzeichnet, dass** eine seitliche Buchse (36; 64; 76 und 38; 66; 78) der seitlichen Buchseneinheit an einer Halterung (2) anliegt, die an der Kabine (1) oder an dem Rahmen (3) befestigt ist.

9. Buchsenanordnung nach einem der Ansprüche 1 bis 8,
**dadurch gekennzeichnet, dass** die Kabine (1) um die Spindel (58) schwenkbar ist.

10. Vordere Aufhängung und federnde Anordnung für eine Kabine für ein Lastkraftfahrzeug,
**dadurch gekennzeichnet, dass** sie eine Buchsenanordnung nach einem Ansprüche 1 bis 9 aufweist.

## Revendications

1. Agencement de coussinet pour une barre anti-roulis (8) dans la suspension d'une cabine de conducteur à ressort (1) par rapport au châssis d'un véhicule (3), dans lequel la barre anti-roulis (8) est supportée pour la rotation par rapport à la fois à la cabine (1) et au châssis (3), laquelle barre anti-roulis (8) comporte deux biellettes (16) orientées sensiblement dans la direction longitudinale du véhicule et chacune située sur leur côté respectif d'un plan vertical longitudinal traversant le milieu du véhicule, lesquelles biellettes (16) sont reliées rigidement conjointement au moyen d'une barre de torsion transversale (14) et dans lequel chacune des biellettes (16) est supportée par rapport à au moins une partie du véhicule sous la forme soit de la cabine du conducteur (1) soit du châssis du véhicule (3) pour permettre une rotation relative entre la biellette (16) et la partie du véhicule autour d'une broche (58) qui est orientée sensiblement dans la direction transversale du véhicule, laquelle biellette (16) est supportée sur la partie du véhicule par l'intermédiaire d'un premier ensemble de coussinet (34) avec des rigidités différentes, dans des directions radiales mutuellement perpendiculaires par rapport à ladite broche (58), **caractérisé en ce que** l'agencement de coussinet comprend également au moins un autre ensemble de coussinet latéral (30, 32, 60, 62, 72, 74) agencé pour amortir les mouvements dans la direction longitudinale de ladite broche (58), dans lequel l'ensemble de coussinet latéral (30, 32, 60, 62, 72, 74) comprend un coussinet latéral (36, 38, 64, 66, 76, 78) et un disque intermédiaire (40, 42, 68, 70, 80, 82) qui est relié au coussinet latéral (36, 38, 64, 66, 76, 78) et dans lequel le disque intermédiaire (40, 42, 68, 70, 80, 82) de l'ensemble de coussinet latéral bute contre la biellette (16).

2. Ensemble de coussinet selon la revendication 1, **caractérisé en ce que** ledit au moins un ensemble de coussinet séparé supplémentaire (30, 32, 60, 62, 72, 74) est remplaçable.

3. Ensemble de coussinet selon l'une des revendications 1 ou 2, **caractérisé en ce que** l'agencement de coussinet comprend deux ensembles de coussinet latéral (30, 32, 60, 62, 72, 74) et, agencés entre eux, un ensemble de coussinet intermédiaire (34).

4. Ensemble de coussinet selon la revendication 3, **caractérisé en ce que** chacun des ensembles de coussinet latéral (30, 60, 72 et respectivement 32, 62, 74) comprend un coussinet latéral (36, 64, 76 et respectivement 38, 66, 78) et un disque intermédiaire (40, 68, 80 et respectivement 42, 70, 82) qui est relié au coussinet latéral (36, 64, 76 et respectivement 38, 66, 78).

5. Ensemble de coussinet selon l'une des revendications 3 ou 4, **caractérisé en ce que** l'ensemble de coussinet intermédiaire (34) comprend une enveloppe extérieure (28), une enveloppe intérieure (44) agencée à l'intérieur et sensiblement concentrique à l'enveloppe extérieure (28) et un coussinet intermédiaire (46) qui est agencé entre l'enveloppe extérieure (28) et l'enveloppe intérieure (44) et qui relie l'enveloppe extérieure (28) à l'enveloppe intérieure (44).

6. Ensemble de coussinet selon la revendication 4, **caractérisé en ce que** le disque intermédiaire (40, 68, 80 et respectivement 42, 70, 82) des ensembles de coussinet latéral bute à la fois contre la biellette (16) et l'enveloppe extérieure (28) de l'ensemble de coussinet intermédiaire.

7. Ensemble de coussinet selon l'une quelconque des revendications 1 à 6, **caractérisé en ce que** ladite broche (58) est fixée à une console (2) qui est fixée à la cabine (1) ou au châssis (3).

8. Ensemble de coussinet selon l'une des revendications 1 ou 6, **caractérisé en ce qu'**un coussinet latéral (36, 64, 76 et respectivement 38, 66, 78) de l'unité de coussinet latéral bute contre une console (2) qui est fixée à la cabine (1) ou au châssis (3).

9. Ensemble de coussinet selon l'une quelconque des revendications 1 à 8, **caractérisé en ce que** la cabine (1) est inclinable autour de ladite broche (58).

10. Agencement à ressort et à suspension avant pour une cabine d'un véhicule lourd, **caractérisé en ce qu'**il comprend un agencement de coussinet selon l'une quelconque des revendications 1 à 9.
